# EUROPEAN PATENT SPECIFICATION

(11) **EP 4 092 312 B1**
(45) Date of publication and mention of the grant of the patent: **05.03.2025**
(21) Application number: 21174295.2
(22) Date of filing: 18.05.2021
(51) Int. Cl.: F16H 25/20

(54) **TELESCOPIC COLUMN WITH STABILIZING DEVICE**
TELESKOPSÄULE MIT STABILISIERUNGSVORRICHTUNG
COLONNE TÉLESCOPIQUE AVEC DISPOSITIF DE STABILISATION

(43) Date of publication of application: 23.11.2022
(73) Proprietor: ROL AB, 555 93 Jönköping (SE)
(72) Inventor: Walker, Rod, 55593 Jönköping (SE)
(74) Representative: AWA Sweden AB

(56) References cited:
- WO-A1-00/56259

## Description

### Technical Field

The present disclosure relates to a telescopic column, and especially a telescopic column comprising telescopically arranged tubes and means for stabilizing the telescopic column.

### Background

Presently, telescopic columns are well known and used in height adjustable furniture, often in height adjustable tables. As telescopic columns commonly comprise axially adjustable tubes, wherein the tubes are telescopically adjustable in relation to each other, and the columns are stabilized laterally by using various means. In the document WO 00/56259, there is disclosed a supporting leg of a bed which is adjustable by means of three telescopic tubes and a driving arrangement.

Usually, the stabilizing means are statically attached at to at least one of the overlapping tube parts of the column, at a surface side adjacent between two overlapping tube parts and comprise plastic "studs" or other means for stabilizing the space between two tubes. The stabilizing means are then providing a "two-point" stabilization. Stabilizing points or means may then also function as bearings for the telescopic column when the column is raised or lowered.

As telescopic columns are height adjustable, the increasing distance between the stabilization points or means when raising the telescopic column comprising several tubes may create instability in the column construction.

Today, the stabilizing means must be distributed at a specific axial minimum distance to be able to provide lateral support to the telescopically arranged tubes in a telescopic column. The longer the distance between stabilizing means or points, the more stable construction. The axial distance between the stabilizing means also constitutes limitations for how far apart the tubes may be displaced, or how short the tube parts may overlap to still maintain lateral stability. The distance between the stabilization points or means will therefore affect the total stroke of the telescopically arranged tubes.

As telescopic columns are often height adjusted, the extension and retraction must be properly facilitated in order to ensure stable function in the long-term use. Thus, there is also a need for enabling and facilitating a proper bearing effect, for the telescopic columns to function properly.

Consequently, a more adjustable solution for laterally stabilizing a telescopic column is needed, which is adjusted to the different heights of an adjustable column and which facilitates altering the height of a telescopic column by also providing a bearing function.

### Summary

It is an object of the present invention to provide a telescopic column comprising telescopic tubes that alleviates drawbacks with present solutions. The invention is defined by the appended independent claims, with embodiments being set forth in the appended dependent claims, in the following description and in the drawings.

According to a first aspect of the present invention, there is provided a telescopic column, comprising at least a first and a second telescopic tube, wherein the column further comprises a first static stabilizing device, a second static stabilizing device, and a mobile stabilizing device, wherein the first and the second stabilizing devices are arranged axially separated at a fixed distance from each other, between the first and a second tube. The mobile stabilizing device is arranged in an inner space of the first tube, and the mobile stabilizing device is axially movable in relation to the first and second static stabilizing devices, and in relation to the first tube.

Thereby, an adaptable and flexible solution may be provided to exert extra support to the telescopic column.

The first and second static stabilizing devices may have an advantage of providing both a supportive function and a bearing function to the telescopic column.

The first and second static stabilizing devices may have an advantage of being simple in construction and being easily produced. Therefore, they may provide cost-effective support together with the mobile stabilizing devices. The first and second static stabilizing devices may be arranged radially between the first and second telescopic tubes.

By having a mobile stabilizing device, which is movable relative to the static stabilizing devices during extension and retraction of the telescopic column, it may be achieved a telescopic column with an improved stability throughout its stroke of length. Especially, the stabilizing effect of the static and mobile stabilizing devices in the telescopic column may increase when the telescopic column is extended.

An advantage of providing the first and the second static stabilizing devices at an outer surface of the first tube is that two supporting points between the first and the second telescopic tubes are formed, wherein the supporting points are static in relation to the first telescopic tube. Thereby, enhanced lateral stability is achieved.

The static stabilizing devices may also provide a bearing effect between the first and the second telescopic tubes. The bearing effect may be enabled due to material quality, of which the static stabilization devices are made of. For example, the stabilization devices may be made of a polymer material. The bearing effect may further be enhanced by the geometric shape of the static stabilization devices. The static stabilization devices may therefore have a tapering or rounded shape facing towards the inner surface side of the second telescopic column. The effect of forming the static stabilization devices in such manner has an effect of decreasing the contact area of the static stabilization devices, but at the same time providing sufficient support laterally. The two static stability devices may provide two bearing points between the first and the second telescopic tubes. Such bearing points may provide a low friction movement between the two tubes. The static stability devices may be fastened to either the first or the second telescopic tube. In one embodiment, one of the static stabilizing devices may be an end cap arranged at an end of the outer of the two telescopic tubes, thereby providing a point of contact between the two tubes.

Also, as the two static stabilizing devices are provided together with the mobile stabilizing device, the stabilizing effect is further advantageous. The advantage being, that the static stabilizing devices may provide lateral stabilization between the first and the second telescopic tubes, whereas the mobile stabilizing device may provide lateral stability in lateral direction between a driving arrangement and the first telescopic tube. In that way, the telescopic column may be provided with lateral support in relation to all the parts comprised in the column.

In that way, when a driving arrangement is positioned through the entire length of the column, comprising two or several telescopic tubes, there is provided an enhanced stability throughout the telescopic column.

The driving arrangement is provided extending through the telescopic tubes, and the mobile stabilizing device is formed and adapted to be coupled to and axially movable relative to the driving arrangement in the inner space of the first tube.

By providing a mobile stabilizing device which is formed and adapted to being coupled to a driving arrangement, enhanced stability for a telescopic column may be provided.

The mobile stabilizing device may be arranged in a radial space between the driving arrangement and an inner surface of the first tube. The mobile stabilizing device may extend radially to be in contact with the driving arrangement and the inner surface of the first tube.

By providing a mobile stabilizing device which is axially movable relative to the driving arrangement in the inner space of the first tube, the mobile stabilizing device has an advantage of providing lateral support for the first telescopic column in different axial positions.

By lateral support it is meant, that the telescopic tubes are laterally stable in relation to each other and in relation to a part of furniture they are arranged to support or bear. Lateral direction may be defined as any direction in a plane which is perpendicular to an axis through a longitudinal direction of the column.

By movable in axial direction it is meant, that the mobile stabilizing device may vary its position axially inside the first telescopic tube. Thereby, lateral support may be provided in a desired position or in a desired place or point inside the first telescopic tube. The mobile stabilizing device's axial position along the driving arrangement may depend on the extension or retraction level of the telescopic column.

By lateral support, it may also be meant that several telescopic tubes may be supported in relation to each other, for example three or more telescopic tubes. That may be achieved by extending the driving arrangement through several tubes and by providing two mobile stabilizing devices, for example one in the first telescopic tube, being connected to the driving arrangement, and one in a third telescopic tube and connected to the driving arrangement, wherein there is a second tube connected to both the first and the third tube.

The driving arrangement may extend through the first and the second tube and may be arranged coaxially with the tubes of the telescopic column.

By means of the three stabilizing devices, stabilizing points of contact between the telescopic tubes and the driving arrangement may be provided, thereby improving the overall stability of the telescopic column throughout the stroke of the column, but especially in the extended position of the column. The static stabilizing devices may provide points of contact between the first and the second tubes, and the mobile stabilizing device may provide a point of contact between the first tube and the driving arrangement.

According to an embodiment, the telescopic column may be in an extended position. By the telescopic tubes being in an extended position it is meant that the first and the second telescopic tubes are positioned so as to be displaced in an axial direction as far apart from each other as possible. By as far as possible it is meant that the telescopic column has sufficient stability to be able to support, for example a tabletop. The stability may then be provided, when the telescopic tubes are in the extended position and supported by the first and second static stabilizing devices and the mobile stabilizing device.

In an extended position, the first and the second telescopic tubes are extended in relation to each other such that a first end of the second tube is closer to a second end of the first tube.

In a retracted position, the first and the second telescopic tubes are retracted in relation to each other, such that the first end of the second tube is adjacent to the first end of the first tube.

According to one embodiment, the mobile stabilizing device may be in a first position, when the telescopic column is in a retracted position. The first position may be provided, when the mobile stabilization device is located adjacent to an end portion of the first telescopic tube, or several tubes, when all tubes comprised in a telescopic column are retracted into each other.

The mobile stabilizing device may be in a second position, when the telescopic column is in an extended position. The second position may be provided, when the mobile stabilizing device is located in a middle section of a first telescopic tube, when the tubes comprised in a telescopic column are extended in relation to each other. The middle section may be at an axial position in the middle between a first end of the first tube and the first static stabilizing device.

When the telescopic column is extended, the mobile stabilizing device is configured to move from the first position towards the second position. When the telescopic column is retracted, the mobile stabilizing device is configured to move from the second position towards the first position. When in the second position, the mobile stabilizing device may be positioned at its maximal axial distance from the static stabilizing devices. The mobile stabilizing device may reach the second position before the telescopic column is fully extended to the extended position.

In one embodiment, the driving arrangement may comprise a spindle, and the spindle may be arranged to, during rotation, axially move the mobile stabilizing device in the inner space of a first tube. Thereby, axial movement of the stabilizing device is provided.

In one embodiment, the mobile stabilizing device may be formed with an opening having inner threads to form a threaded connection with the spindle. Thereby, the spindle may drive the mobile stabilizing device by rotating in a first or a second direction. By rotating in the first direction, the spindle may move the mobile stabilizing device in one direction along the spindle axis, and vice versa.

Yet in another embodiment, the spindle may comprise a threadless section at an axial position corresponding to the second position of the mobile stabilizing device. The threadless section enables the mobile stabilizing part not to be in a threaded connection with the spindle. Thereby, the connection may be controlled by moving the mobile stabilizing device to the threadless section. The spindle may be rotated such that mobile stabilizing device is moved towards the second position, and when the mobile stabilizing device reaches the second position where threads are missing on the spindle, the mobile stabilizing device may be prevented from moving further along the spindle. The second position of the mobile stabilizing device may thereby be controlled.

In one embodiment, the mobile stabilizing device may be out of the threaded connection from the spindle in the second position. A part of the driving arrangement may be configured to push the mobile stabilizing device to threaded connection with the spindle during retraction of the telescopic column. When the telescopic column is retracted, the mobile stabilizing device may initially remain at the second position and the axial distance between the mobile stabilizing device and the static stabilizing devices may decrease. During retraction of the telescopic column, a part of the driving arrangement may move along the spindle towards a first end of the first tube. The part of the driving arrangement may be coupled to the second tube, thereby providing the telescopic movement between the first and the second tube. When the part of the driving arrangement reaches the second position of the mobile stabilizing device, the part will push on the mobile stabilizing device into threaded connection with the spindle. Thereafter, the mobile stabilizing device will move along the spindle towards the first end of the first tube. Hence, during retraction of the telescopic column towards the retracted position, the mobile stabilizing device may initially remain at the second position, and when a portion of the retraction is performed the mobile stabilizing device may start moving towards the first position.

In one embodiment, the threadless section of the spindle at the second position of the mobile stabilizing device may be a first threadless section, and the spindle may comprise a second threadless section at an axial position corresponding to the first position of the mobile stabilizing device. When the mobile stabilizing device has moved to the first position during retraction of the telescopic column, it may reach the second threadless section providing that the axial movement of the mobile stabilizing device is stopped. During rotation of the spindle for retraction of the telescopic column, the mobile stabilizing device will be prevented from getting into threaded connection with the spindle. In fully retracted state of the telescopic column, a part of the driving arrangement may press on the mobile stabilizing device to be kept in the first position. When the mobile stabilizing device is in the first position, and an extension of the telescopic column is initiated from the fully retracted state, the mobile stabilizing device may engage into threaded connection with the spindle. In one embodiment, the mobile stabilizing device may comprise a spring that facilitates the mobile stabilizing device to get into threaded connection with the spindle when the part of the driving arrangement releases its pressure against the mobile stabilizing device. The spring may provide a spring force towards the first end of the first tube.

In another embodiment, the mobile stabilizing device may be configured for sliding movement relative to the driving arrangement, and the driving arrangement may comprise protruding means formed on an outer surface of the driving arrangement. Thereby, protruding means on the driving arrangement may be adapted to engage with the mobile stabilizing device. The protruding means may enlarge the circumference of the driving arrangement and thereby, when the driving arrangement is in axial movement, may engage the mobile stabilizing device. The protruding means may be configured to cause axial movement of the mobile stabilizing device in the first telescopic tube during extension of the telescopic column. The driving arrangement in the first tube may comprise a tube having a substantially flat outer surface. The mobile stabilizing device may enclose the tube and be configured for sliding movement along the outer surface of the tube. The mobile stabilizing device may be configured to have lower friction towards the driving arrangement than towards an inner surface of the first telescopic tube.

According to one embodiment, the protruding means is configured to engage the mobile stabilizing device to be moved from the first position to the second position, when the telescopic column is extending.

According to one embodiment, the mobile stabilizing device may comprise an opening configured to enclose the driving arrangement, and the protruding means may locally radially extend the cross-section of the driving arrangement, thereby preventing the protruding means to pass through the opening of the mobile stabilizing device.

According to an embodiment, the first and the second static stabilizing devices may be arranged at an outer surface of the first telescopic tube. An advantage of providing the first and the second static stabilizing devices at an outer surface of the first tube may be that two supporting points between the first and the second telescopic tubes are formed, wherein the supporting points are static in relation to the first telescopic tube. Thereby, enhanced lateral stability may be achieved.

The static stabilizing devices may also provide a bearing effect between the first and the second telescopic tubes. The bearing effect may be enabled due to material quality, of which the static stabilization devices are made of. For example, the stabilization devices may be made of a polymer material. The bearing effect may further be enhanced by the geometric shape of the static stabilization devices. The static stabilization devices may therefore have a tapering or rounded shape facing towards the inner surface side of the second telescopic column. The effect of forming the static stabilization devices in such manner has an effect of decreasing the contact area of the static stabilization devices, but at the same time providing sufficient support laterally.

Also, as the two static stabilizing devices are provided together with the mobile stabilizing device, the stabilizing effect is further advantageous. The advantage being, that the static stabilizing devices may provide lateral stabilization between the first and the second telescopic tubes, whereas the mobile stabilizing device may provide lateral stability in lateral direction between the driving arrangement and the first telescopic tube. In that way, the telescopic column may be provided with lateral support in relation to all the parts comprised in the column.

In that way, when a driving arrangement is positioned through the entire length of the column, comprising one or several telescopic tubes, there is provided an enhanced stability throughout the telescopic column.

In one embodiment, the first and the second static stabilizing devices may be arranged at an outer surface of the second telescopic tube. An advantage of providing the first and the second static stabilizing devices at an outer surface part of the second stabilizing device is that two supporting points between the first and the second telescopic tubes are formed, wherein the supporting points are static in relation to the first telescopic tube. Thereby, enhanced lateral stability is achieved.

An advantage of providing a first and a second stabilizing devices on an outer surface of the second telescopic tube is that the first telescopic tube may be arranged and formed to be larger in lateral direction, such that the second telescopic tube may be surrounded by the first telescopic tube, when retracting.

According to a second aspect, there is provided a telescopic column, comprising at least a first, a second and a third telescopic tube, wherein the column further comprises: a first static stabilizing device; a second static stabilizing device, a third static stabilizing device; a fourth static stabilizing device, a first mobile stabilizing device, and a second mobile stabilizing device and a driving arrangement. The first and the second static stabilizing devices are arranged axially separated at a fixed distance from each other, and between the first and a second tubes, the third and fourth static stabilizing devices are arranged axially separated at a fixed distance from each other, and between the second and the third tubes. The first mobile stabilizing device is arranged in an inner space of the first tube, and wherein the first mobile stabilizing device is axially movable in relation to the first and second static stabilizing devices, and in relation to the first tube and the second mobile stabilizing device is arranged in an inner space of the third tube, wherein the second mobile stabilizing device is axially movable in relation to the third and fourth static stabilizing devices, and in relation to the third tube. The embodiments according to the first aspect of the invention are applicable to the second embodiment as well.

### Brief Description of the Drawings

The invention will in the following be described in more detail with reference to the enclosed drawings, wherein:
Fig. 1a shows a side cut view of a telescopic column in an extended position according to an embodiment of the invention;
Fig. 1b shows a bottom view of a telescopic column according to an embodiment of the invention;
Fig. 1c shows a section view of section A of a telescopic column according to an embodiment of the invention;
Fig. 1d shows a front -up view of a mobile stabilizing device according to an embodiment of the invention;
Fig. 1e shows a section view of section B of a telescopic column according to an embodiment of the invention;
Fig. 1f shows a front view of a mobile stabilizing device according to an embodiment of the invention;
Fig. 1g shows a section view of section C of a telescopic column according to an embodiment of the invention;
Fig. 1h shows a section view of section D of a telescopic column according to an embodiment of the invention;
Fig. 2a shows a side cut view of a telescopic column in a retracted position according to an embodiment of the invention;
Fig. 2b shows a bottom view of a telescopic column according to an embodiment of the invention;
Fig. 2c shows a section view of section E of a telescopic column according to an embodiment of the invention; and
Fig. 2d illustrates a section view of section F of the telescopic column according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

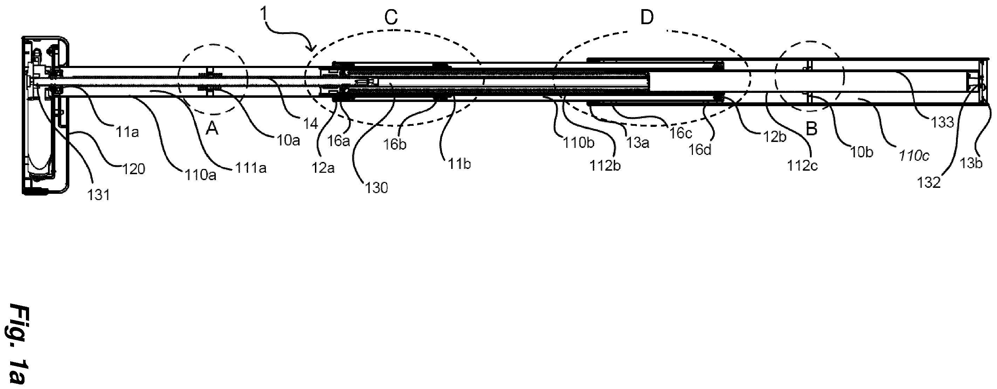

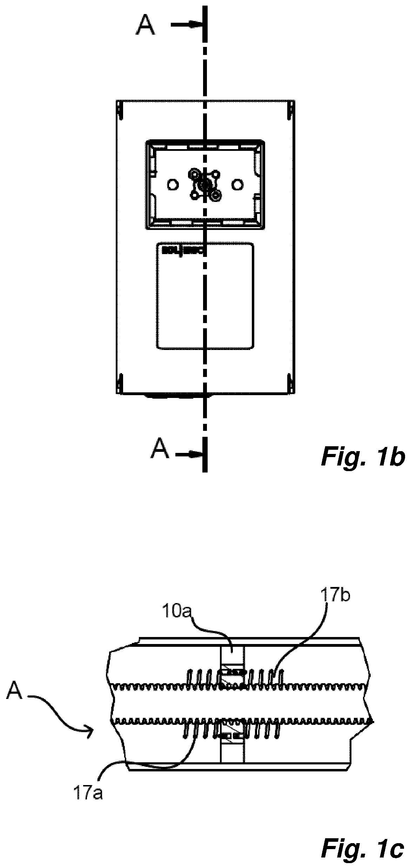

Figures 1a and 1b illustrate a telescopic column 1 according to an embodiment of the invention. The telescopic column 1 comprises a first tube 110a, a second tube 110b, and a third telescopic tube 110c. The illustrated embodiment comprises two embodiments of stabilizing functions, each comprising two static stabilizing devices and one mobile stabilizing device. The two embodiments of stabilizing functions may be applied depending on whether the first telescopic tube is an inner tube and the second telescopic tube is an outer tube, or vice versa. What is described below for each of the two embodiments of stabilizing functions may separately be applied on a telescopic column comprising only one of the embodiments of stabilizing functions.

Figure 1b illustrates a bottom view of the telescopic column 1 and a marked cross section A-A.

Figure 1a shows the cross-sectional view A-A of the telescopic column 1 in an extended position. Through, or in, the inner spaces of the telescopic tubes 110a, 110b and 110c, a driving arrangement 130 is arranged. At its first end 131, the driving arrangement 130 is attached to a housing 120, which may comprise a driving unit, and at the second end 132, the driving arrangement 130 is fastened to the second end 13b of the third tube 110c.

The telescopic column 1 may comprise three telescopic tubes, as seen in figure 1a. As an alternative embodiment, the telescopic column 1 may also comprise two telescopic tubes or four telescopic tubes. The column 1 further comprises static stabilizing devices 16a, 16b, 16c and 16d and mobile stabilizing devices 10a and 10b. The static stabilizing devices 16a, 16b, 16c and 16d provide a complementing lateral stabilizing function, as well as a bearing function between the tubes 110a, 110b and 110c.

The first telescopic tube 110a has a first end 11a at the housing 120, representing a first end of the telescopic column 1, and a second end 11b. The second telescopic tube 110b has a first end 12a and a second end 12b. The third telescopic tube 110c has a first end 13a and a second end 13b. The second end 13b of the third telescopic tube 110c represents the second end of the telescopic column 1. In the illustrated embodiment, the first telescopic tube 110a is an inner tube, the second telescopic tube 110b is a middle tube, and the third telescopic tube 110c is an outer tube.

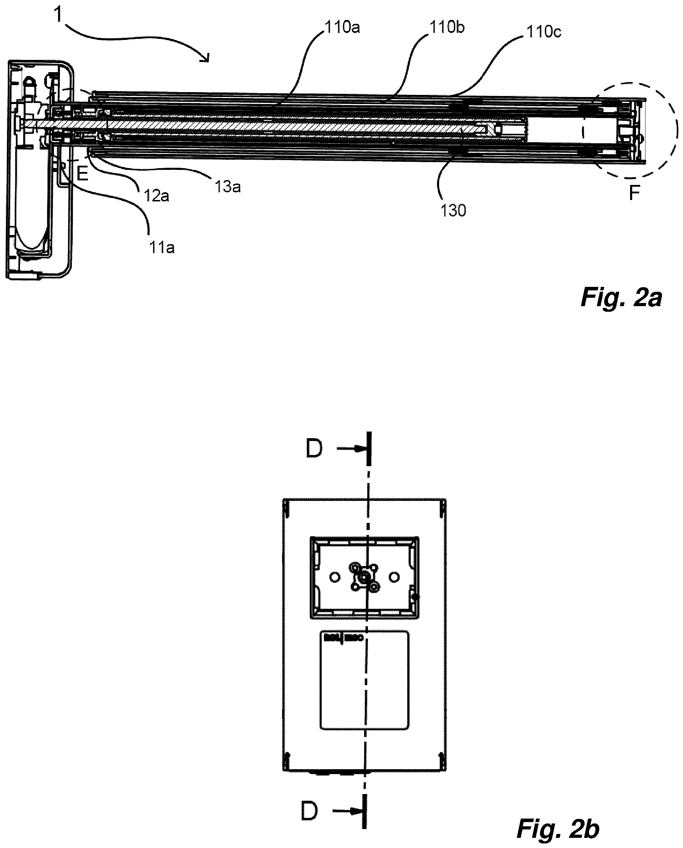

The telescopic tubes 110a, 110b and 110c are axially movable in relation to each other, by means of the driving arrangement 130. The driving arrangement may be adapted to retract and extend the telescopic column 1 comprising telescopic tubes 110a, 110b and 110c to occupy an extended position or a retracted position. The column 1 may function in an embodiment with two tubes or four and more telescopic tubes (not illustrated). As seen in figure 1a, the telescopic column 1 is in an extended position. The extended position enables the telescopic column to provide a longest possible length. The retracted position can be seen in figure 2a.

The driving arrangement 130, as seen in the figure 1a, is adapted for operating by means of a spindle 14, which is arranged in the inner space 111a of the first telescopic tube 110a. The spindle 14 according to the embodiment as seen in the figure, is an externally threaded first driving part. The spindle 14 is rotated by the driving unit, such as an electric motor, comprised in the housing 120. The spindle 14 has no threads adjacent to the first end 131 of the driving arrangement, to enable storing the mobile stabilizing device 10a in a first position, when the column 1 is in a retracted position. The external threads provided on the spindle 14 enable the spindle 14 to drive other driving arrangement parts to extend or retract the telescopic column 1.

The driving arrangement 130 comprises the spindle 14, a second driving member 112b and a third driving member 112c, arranged to be connected by threads or other means. The driving arrangement 130 extends from the first tube 110a to the second 110b and third tubes 110c, being fixedly attached to the first end 11a of the first tube 110a and to the second end 13b of the third tube. The extending and retracting function for the column 1 may thereby be provided by operating the driving arrangement 130. The three parts of the driving arrangement 130 are coaxially arranged through the telescopic column 1. The spindle 14 is arranged axially fixed to the first telescopic tube 110a. The second driving member 112b is axially fixed to the second telescopic tube 110b. The third driving member 112c is axially fixed to the third telescopic tube 110c. The three parts 14, 112b, 112c of the driving arrangement 130 interacts to extend or retract the telescopic column 1.

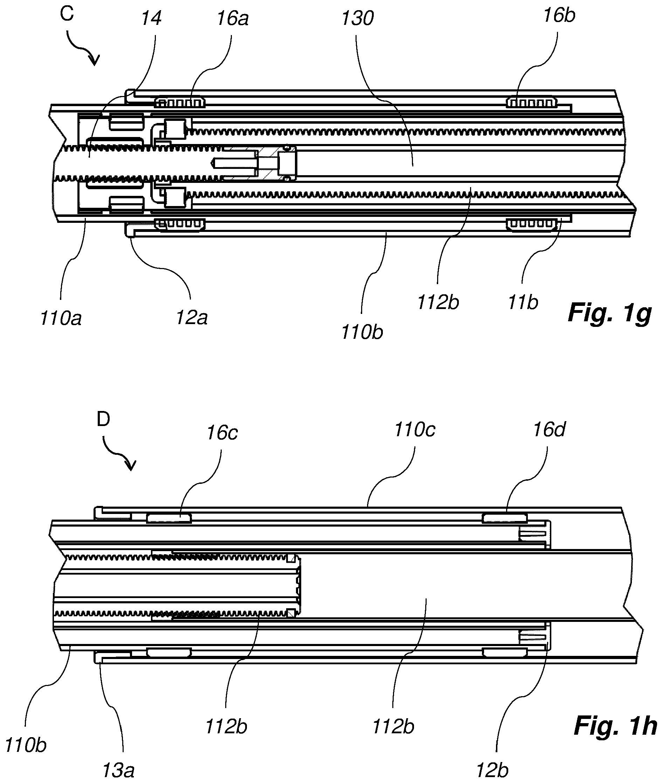

As seen in fig. 1g, illustrating section C as indicated in fig. 1a, the static stabilizing devices 16a, 16b are arranged between the first telescopic tube 110a and the second telescopic tube 110b. The static stabilizing devices 16a, 16b are fixedly attached to the first telescopic tube 110a being the inner tube of the first and second telescopic tubes 110a, 110b. A second static stabilizing devices 16b is arranged at the second end 11b of the first telescopic tube 110a. A first static stabilizing device 16a is arranged at a fixed distance to the second stabilizing device 16b. When the telescopic column 1 is in the extended position, i.e. having its maximum length, the first static stabilizing device 16a is located adjacent to a first end 12a of the second telescopic tube 110b.

As seen in fig. 1h, illustrating section D as indicated in fig. 1a, the static stabilizing devices 16c, 16d are arranged between the second telescopic tube 110b and the third telescopic tube 110c. The static stabilizing devices 16c, 16d are fixedly attached to the second telescopic tube 110b being the inner tube of the second and third telescopic tubes 110b, 110c. A second static stabilizing devices 16d is arranged at the second end 12b of the second telescopic tube 110b. A first static stabilizing device 16c is arranged at a fixed distance to the second stabilizing device 16d. When the telescopic column 1 is in the extended position, i.e. having its maximum length, the first static stabilizing device 16b is located adjacent to a first end 13a of the third telescopic tube 110c.

As mentioned above, the first telescopic tube 110a also comprises a first mobile stabilizing device 10a. The third tube 110c comprises a second mobile stabilizing device 10b.

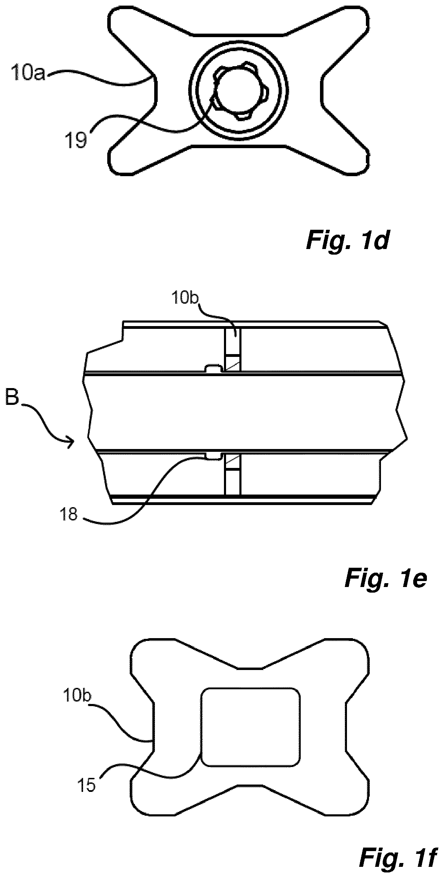

Fig. 1c illustrates a cross-sectional view A of a telescopic column, specifically a part of the first tube 110a comprising the spindle 14 and the mobile stabilizing device 10a. The mobile stabilizing device 10a is formed as a disc, optionally having extruded corners, as seen in fig 1d. The mobile stabilizing device 10a has an inner threaded part 19 adapted to be engaged with the threaded spindle 14 and to be adapted to be moved by the rotational movement of the spindle 14. Thereby, the threaded spindle 14 comprised in the driving arrangement 130 and driven into a rotating movement by the driving unit comprised in the housing 120, is able to move the mobile stabilization device 10a. As may be seen in fig 1c, the threaded spindle 14 lacks threads a distance corresponding to at least the thickness of the mobile stabilizing device 10a. The threadless portion of the spindle 14 is provided at an axial position of the spindle 14 corresponding to the second position of the mobile stabilizing device 10a, i.e. the axial position the mobile stabilizing device 10a is intended to be at when the telescopic column 1 is in its extended position.

As further seen in fig. 1c, a spring 17a and a spring 17b are attached to the mobile stabilizing device 10a. Spring 17a is to be utilized when the column 1 is retrieved from a retracted position to an extended position. This will be further explained in fig. 2a. Spring 17b is to be utilized when the column 1 is moving towards a retraced position. When the mobile stabilizing device 10a is in the second position, wherein the mobile stabilizing device is not in threaded connection with the spindle 14, and the driving arrangement 130 drives the column 1 towards a retracted position, such that a driving arrangement part coupled to the second telescopic tube 110b pushes on the spring 17b, the mobile stabilizing device 10a is pushed into threaded connection with the spindle 14 and thereby to move towards the first end 11a of the first column 110a and the first position.

The embodiment as seen in fig. 1d illustrates a mobile stabilizing device 10a from a front view, according to an embodiment as seen in fig. 1c. The mobile stabilizing device 10a is a disc, having extruded, rounded corners. The mobile stabilizing device 10a also has an opening having an inner threaded part 19. The mobile stabilizing device 10a is shaped in correspondence to inner shape of the first telescopic tube 110a.

As seen in fig. 1e, illustrating section B as indicated in fig. 1a, the second mobile stabilizing device 10b similarly to the first stabilizing device 10a, may be in in a first position, when the column is retracted and in a second position, when the column 1 is extended. The second position for the mobile stabilizing device 10b may be defined as a position wherein the mobile stabilizing device 10b is kept in a position around 1/3 to 2/3 of the total length of the third tube by protruding means 18.

Fig. 1f shows a mobile stabilizing device 10b according to an embodiment, wherein the mobile stabilizing device 10b is formed with a substantially rectangular opening 15. The opening may, in another embodiment be formed in another shape. The purpose is to match the form of the outer surface 133 of the driving member 112c of the driving arrangement 130 in the third telescopic tube 110c to enable lateral stabilization between the tube and the driving arrangement 130 and to provide mobility in relation to the same. The opening 15 is further formed so as to prevent the protruding means 18 on the driving member 112b in the third telescopic tube 110c from passing the mobile stabilizing device 10b. Instead the mobile stabilizing device 10b is formed and configured such that during axial movement of the third tube 110c towards the extended position, the protruding means 18 engages with the mobile stabilizing device 10b such that it is pushed towards its second position. The mobile stabilizing device 10b is shaped in correspondence to inner shape of the third telescopic tube 110c.

As seen in figs. 1a and 2a, the first telescopic tube 110a may also be seen as an inner tube, the second tube 110b as an intermediate tube and the third tube 110c as an outer tube. This order could also be reversed in an embodiment not illustrated. Similarly, in another embodiment not illustrated, only one kind of the mobile stabilizing devices 10a and 10b may be utilized, as a single mobile stabilizing device in a column or in several tubes.

Preferably, the mobile and static stabilizing devices 10a, 10b are made of a plastic material. The tubes and the driving arrangement may preferably made of a metallic or a plastic material.

When the column 1 is in a retracted position, as will be described further in fig 2a, the mobile stabilization device 10a will be in a first position, adjacent to the housing 120 at the first end 11a of the first telescopic tube 110a.

When the spindle 14 during a rotating movement drives the mobile stabilizing device 10a into a position where there are no threads, as illustrated in fig. 1c, the mobile stabilization device 10a will reach a position wherein the mobile stabilization device 10a is in the second position and wherein there are no threads on the spindle 14 to further engage with the mobile stabilizing device 10a. The second position may be arranged somewhere between 1/3 to 2/3 of a length of the first tube 110a.

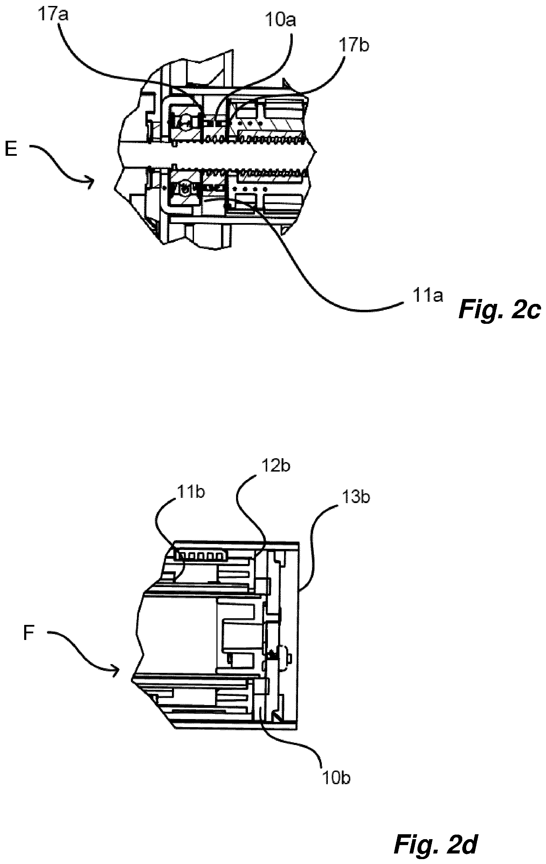

Fig. 2c shows a cut out section E as marked in fig. 2a, of the telescopic column 1, more closely showing the first end 11a of the first tube 110a, adjacent to the mobile stabilizing device 10a. The spring 17a is compressed between the first end 11a of the first tube 110a, and the mobile stabilizing device 10a. Upon the movement of the spindle 14, the driving arrangement 130 will extend the second and the third telescopic tubes to begin with, allowing the pressure from the spring 17a to ease and allow the spring 17a to push the mobile stabilizing device 10a towards threaded connection with the threaded spindle 14. The internal threaded part 19 may then engage with the threaded spindle 14 and to be driven axially towards the second position of the mobile stabilizing device 10a.

Fig 2d shows a cut out section F as marked in fig. 2a, of the telescopic column, more closely showing the second end 11b of the first tube 110a, the second end 12b of the second tube 110b, and the second end 13b of the third tube 110c. Between the second end 13b of the third tube 110c, which is a closed end, and the second end 12b of the second tube 110b, the mobile stabilizing device 10b is located in its first position.

The mobile stabilizing device 10b may, as seen in figs. 2a and 2d be pressed against the second end 13b of the third tube 110c, when being in a first position, when the column 1 is in a retracted position. The mobile stabilizing device 10b is then located between the second end 12b of the second telescopic tube 110b and the closed second end 13b of the third telescopic tube 110c. When the telescopic column 1 is moving towards the extended position, the second end 13b of the third telescopic tube 110c moves away from the second end 12b of the second telescopic tube 110b. The mobile stabilizing device 10b is initially kept adjacent to the second end of the second tube 110b. The mobile stabilizing device 10b is configured to have less friction towards the driving arrangement, e.g. the outer surface 133 of the driving member 112b in the third tube 110c, than towards the inner surface of the third tube 110c. When extending towards the extended state, the protruding means 18 arranged on the outer surface 133 of the driving arrangement will eventually engage with the mobile stabilizing device 10b and move the mobile stabilizing device 10b towards the second position.

When the telescopic column 1 is retracting from the extended position, the mobile stabilizing device 10b will initially stay at the second position relative to the second tube, and thereby relative to the static stabilizing devices 16c, 16d. When the second end 13b of the third tube 110c reaches the mobile stabilizing device 10b, the second end 13b will engage with the mobile stabilizing device 10b and push the mobile stabilizing device 10b towards the first position.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A telescopic column (1),
comprising at least a first (110a, 110c) and a second telescopic tube (110b) telescopically movable relative to each other, and a driving arrangement (130) extending through the first and the second telescopic tubes (110a, 110b, 110c)
wherein the telescopic column (1) further comprises:
a first static stabilizing device (16a, 16c);
a second static stabilizing device (16b, 16d); and
a mobile stabilizing device (10a, 10b);
wherein the first and the second stabilizing devices are arranged axially separated at a fixed axial distance from each other, radially between and in contact with the first and a second tube, providing a bearing function therebetween;
wherein the mobile stabilizing device is arranged in an inner space (111a) of the first tube and in contact with an inner surface of the first tube and the driving arrangement, and
wherein the mobile stabilizing device is axially movable in relation to the first and second static stabilizing devices, and in relation to the first tube and the driving arrangement, during extension and retraction of the telescopic column.

2. Telescopic column (1) according to claim 1, wherein the mobile stabilizing device (10a, 10b) is configured to move between a first position and a second position when the telescopic column is extending and retracting.

3. Telescopic column (1) according to claim 1 or 2, wherein the mobile stabilizing device (10a, 10b) extends radially between the driving arrangement (130) and the inner surface of the first tube.

4. Telescopic column (1) according to any of the preceding claims, wherein the driving arrangement comprises a spindle (14), arranged to, during rotation, axially move the mobile stabilizing device (10a) in the inner space of a first tube.

5. Telescopic column (1) according to claim 4, wherein the spindle is formed with outer threads and the mobile stabilizing device is formed with an internally threaded part (19) in threaded connection with the spindle.

6. Telescopic column (1) according to claim 5, wherein the spindle comprises a first threadless section at an axial position corresponding to the second position of the mobile stabilizing device.

7. Telescopic column (1) according to claim 6, wherein the mobile stabilizing device (10a) is out of the threaded connection with the spindle (14) in the second position, and wherein a part of the driving arrangement (130) is configured to push the mobile stabilizing device to threaded connection with the spindle during retraction of the telescopic column (1).

8. Telescopic column (1) according to any of the claims 5-7, wherein the spindle (14) comprises a second threadless section at an axial position corresponding to the first position of the mobile stabilizing device (10a).

9. Telescopic column (1) according to any of claims 1-3, wherein the mobile stabilizing device (10b) is configured for sliding movement relative to the driving arrangement (130, 133), and wherein the driving arrangement comprises protruding means (18) adapted to cause axial movement of the mobile stabilizing device (10b) along the driving arrangement during extension of the telescopic column.

10. Telescopic column according to claim 9, wherein the protruding means (18) is configured to engage the mobile stabilizing device (10b) to be moved from the first position towards the second position, when the telescopic column is extending.

11. Telescopic column according to any of the claims 9-10, wherein the mobile stabilizing device (10b) comprises an opening (15) configured to enclose the driving arrangement (130), and wherein the protruding means (18) locally radially extends the cross-section of the driving arrangement, thereby preventing the protruding means to pass through the mobile stabilizing device (10b).

12. Telescopic column (1) according to any of the preceding claims, wherein the first and the second static stabilizing devices (16a, 16b) are arranged at an outer surface of the first tube (110a).

13. Telescopic column (1) according to any of the claims 1-12, wherein the first and the second static stabilizing devices (16c, 16d) are arranged on an outer surface of the second tube (110b) and in movable contact with an inner surface of the first tube (110c).

14. A telescopic column (1), according to any of the claims 1-13 further comprising a third telescopic tube (110c),
a third static stabilizing device (16c);
a fourth static stabilizing device (16d);
a second mobile stabilizing device (10b); and
wherein the driving arrangement (130) further extends through the third telescopic tube (110c);
wherein the third and fourth static stabilizing devices are arranged axially separated at a fixed distance from each other, and between the second and the third tubes;
wherein the second mobile stabilizing device is arranged in an inner space of the third tube, and wherein the second mobile stabilizing device is axially movable in relation to the third and fourth static stabilizing devices, and in relation to the third tube.

## Patentansprüche

1. Teleskopsäule (1),
umfassend mindestens ein erstes (110a, 110c) und ein zweites Teleskoprohr (110b), die in Bezug zueinander teleskopisch beweglich sind, und eine Antriebsanordnung (130), die sich durch das erste und das zweite Teleskoprohr (110a, 110b, 110c) erstreckt,
wobei die Teleskopsäule (1) ferner Folgendes umfasst:
eine erste statische Stabilisierungsvorrichtung (16a, 16c);
eine zweite statische Stabilisierungsvorrichtung (16b, 16d); und
eine mobile Stabilisierungsvorrichtung (10a, 10b);
wobei die erste und die zweite Stabilisierungsvorrichtung in einem festen axialen Abstand axial getrennt voneinander, radial zwischen dem ersten und einem zweiten Rohr und in Kontakt mit diesen angeordnet sind, wodurch eine Lagerfunktion dazwischen bereitgestellt wird;
wobei die mobile Stabilisierungsvorrichtung in einem Innenraum (111a) des ersten Rohrs und in Kontakt mit einer Innenfläche des ersten Rohrs und der Antriebsanordnung angeordnet ist, und
wobei die mobile Stabilisierungsvorrichtung im Verhältnis zu der ersten und der zweiten statischen Stabilisierungsvorrichtung und im Verhältnis zu dem ersten Rohr und der Antriebsanordnung während des Ausfahrens und Einfahrens der Teleskopsäule axial beweglich ist.

2. Teleskopsäule (1) nach Anspruch 1, wobei die mobile Stabilisierungsvorrichtung (10a, 10b) dazu konfiguriert ist, sich zwischen einer ersten Position und einer zweiten Position zu bewegen, wenn die Teleskopsäule ausgefahren und eingefahren wird.

3. Teleskopsäule (1) nach Anspruch 1 oder 2, wobei sich die mobile Stabilisierungsvorrichtung (10a, 10b) radial zwischen der Antriebsanordnung (130) und der Innenfläche des ersten Rohrs erstreckt.

4. Teleskopsäule (1) nach einem der vorhergehenden Ansprüche, wobei die Antriebsanordnung eine Spindel (14) umfasst, die dazu angeordnet ist, während der Drehung die mobile Stabilisierungsvorrichtung (10a) im Innenraum eines ersten Rohrs axial zu bewegen.

5. Teleskopsäule (1) nach Anspruch 4, wobei die Spindel mit Außengewinden ausgebildet ist und die mobile Stabilisierungsvorrichtung mit einem mit einem Innengewinde versehenen Teil (19) ausgebildet ist, das in Gewindeverbindung mit der Spindel steht.

6. Teleskopsäule (1) nach Anspruch 5, wobei die Spindel einen ersten gewindelosen Abschnitt an einer axialen Position umfasst, die der zweiten Position der mobilen Stabilisierungsvorrichtung entspricht.

7. Teleskopsäule (1) nach Anspruch 6, wobei sich die mobile Stabilisierungsvorrichtung (10a) außerhalb der Gewindeverbindung mit der Spindel (14) in der zweiten Position befindet, und wobei ein Teil der Antriebsanordnung (130) dazu konfiguriert ist, während des Einfahrens der Teleskopsäule (1) die mobile Stabilisierungsvorrichtung in die Gewindeverbindung mit der Spindel zu drücken.

8. Teleskopsäule (1) nach einem der Ansprüche 5-7, wobei die Spindel (14) einen zweiten gewindelosen Abschnitt an einer axialen Position umfasst, die der ersten Position der mobilen Stabilisierungsvorrichtung (10a) entspricht.

9. Teleskopsäule (1) nach einem der Ansprüche 1-3, wobei die mobile Stabilisierungsvorrichtung (10b) in Bezug zu der Antriebsanordnung (130, 133) für eine Gleitbewegung konfiguriert ist, und wobei die Antriebsanordnung ein hervorstehendes Mittel (18) umfasst, das dazu ausgelegt ist, während des Ausfahrens der Teleskopsäule eine axiale Bewegung der mobilen Stabilisierungsvorrichtung (10b) entlang der Antriebsanordnung zu bewirken.

10. Teleskopsäule nach Anspruch 9, wobei das hervorstehende Mittel (18) dazu konfiguriert ist, mit der mobilen Stabilisierungsvorrichtung (10b) in Eingriff zu gelangen, um von der ersten Position in die zweite Position bewegt zu werden, wenn die Teleskopsäule ausgefahren wird.

11. Teleskopsäule nach einem der Ansprüche 9-10, wobei die mobile Stabilisierungsvorrichtung (10b) eine Öffnung (15) umfasst, die dazu konfiguriert ist, die Antriebsanordnung (130) zu umgeben, und wobei das hervorstehende Mittel (18) den Querschnitt der Antriebsanordnung stellenweise radial erweitert, wodurch verhindert wird, dass das hervorstehende Mittel die mobile Stabilisierungsvorrichtung (10b) durchdringt.

12. Teleskopsäule (1) nach einem der vorhergehenden Ansprüche, wobei die erste und die zweite statische Stabilisierungsvorrichtung (16a, 16b) an einer Außenfläche des ersten Rohrs (110a) angeordnet sind.

13. Teleskopsäule (1) nach einem der Ansprüche 1-12, wobei die erste und die zweite statische Stabilisierungsvorrichtung (16c, 16d) an einer Außenfläche des zweiten Rohrs (110b) und in beweglichem Kontakt mit einer Innenfläche des ersten Rohrs (110c) angeordnet sind.

14. Teleskopsäule (1) nach einem der Ansprüche 1-13,
ferner umfassend ein drittes Teleskoprohr (110c),
eine dritte statische Stabilisierungsvorrichtung (16c);
eine vierte statische Stabilisierungsvorrichtung (16d);
eine zweite mobile Stabilisierungsvorrichtung (10b); und
wobei sich die Antriebsanordnung (130) ferner durch das dritte Teleskoprohr (110c) erstreckt;
wobei die dritte und die vierte statische Stabilisierungsvorrichtung in einem festen Abstand axial getrennt voneinander und zwischen dem zweiten und dem dritten Rohr angeordnet sind;
wobei die zweite mobile Stabilisierungsvorrichtung in einem Innenraum des dritten Rohrs angeordnet ist, und wobei die zweite mobile Stabilisierungsvorrichtung im Verhältnis zu der dritten und der vierten statischen Stabilisierungsvorrichtung und im Verhältnis zu dem dritten Rohr axial beweglich ist.

## Revendications

1. Colonne télescopique (1),
comprenant au moins un premier (110a, 110c) et un deuxième tube télescopique (110b) déplaçables de façon télescopique les uns par rapport aux autres, et un ensemble d'entraînement (130) s'étendant à travers les premier et deuxième tubes télescopiques (110a, 110b, 110c),
dans laquelle la colonne télescopique (1) comprend en outre :
un premier dispositif de stabilisation statique (16a, 16c) ;
un deuxième dispositif de stabilisation statique (16b, 16d) ; et
un dispositif de stabilisation mobile (10a, 10b) ;
dans laquelle les premier et deuxième dispositifs de stabilisation sont disposés axialement séparés l'un de l'autre selon une distance axiale fixe, radialement entre et en contact avec le premier et un deuxième tube, fournissant une fonction de support entre eux ;
dans laquelle le dispositif de stabilisation mobile est disposé dans un espace intérieur (111a) du premier tube et en contact avec une surface intérieure du premier tube et l'ensemble d'entraînement, et
dans laquelle le dispositif de stabilisation mobile est déplaçable axialement par rapport aux premier et deuxième dispositifs de stabilisation statiques, et par rapport au premier tube et à l'ensemble d'entraînement, pendant l'extension et la rétraction de la colonne télescopique.

2. Colonne télescopique (1) selon la revendication 1, dans laquelle le dispositif de stabilisation mobile (10a, 10b) est configuré pour se déplacer entre une première position et une deuxième position lorsque la colonne télescopique s'étend et se rétracte.

3. Colonne télescopique (1) selon la revendication 1 ou 2, dans laquelle le dispositif de stabilisation mobile (10a, 10b) s'étend radialement entre l'ensemble d'entraînement (130) et la surface intérieure du premier tube.

4. Colonne télescopique (1) selon l'une quelconque des revendications précédentes, dans laquelle l'ensemble d'entraînement comprend une broche (14) conçue pour déplacer axialement le dispositif de stabilisation mobile (10a) dans l'espace intérieur d'un premier tube pendant la rotation.

5. Colonne télescopique (1) selon la revendication 4, dans laquelle la broche est formée avec des filetages extérieurs et le dispositif de stabilisation mobile est formé avec une partie filetée intérieure (19) en raccord fileté avec la broche.

6. Colonne télescopique (1) selon la revendication 5, dans laquelle la broche comprend une première section sans filetage au niveau d'une position axiale correspondant à la deuxième position du dispositif de stabilisation mobile.

7. Colonne télescopique (1) selon la revendication 6, dans laquelle le dispositif de stabilisation mobile (10a) est hors du raccord fileté avec la broche (14) dans la deuxième position, et dans laquelle une partie de l'ensemble d'entraînement (130) est configurée pour pousser le dispositif de stabilisation mobile vers le raccord fileté avec la broche pendant la rétraction de la colonne télescopique (1).

8. Colonne télescopique (1) selon l'une quelconque des revendications 5 à 7, dans laquelle la broche (14) comprend une deuxième section sans filetage au niveau d'une position axiale correspondant à la première position du dispositif de stabilisation mobile (10a).

9. Colonne télescopique (1) selon l'une quelconque des revendications 1 à 3, dans laquelle le dispositif de stabilisation mobile (10b) est configuré pour un mouvement de coulissement par rapport à l'ensemble d'entraînement (130, 133), et dans laquelle l'ensemble d'entraînement comprend un moyen faisant saillie (18) adapté pour produire un mouvement axial du dispositif de stabilisation mobile (10b) le long de l'ensemble d'entraînement pendant l'extension de la colonne télescopique.

10. Colonne télescopique selon la revendication 9, dans laquelle le moyen faisant saillie (18) est configuré pour engager le dispositif de stabilisation mobile (10b) pour un déplacement de la première position vers la deuxième position lors de l'extension de la colonne télescopique.

11. Colonne télescopique selon l'une quelconque des revendications 9 à 10, dans laquelle le dispositif de stabilisation mobile (10b) comprend une ouverture (15) configurée pour entourer l'ensemble d'entraînement (130), et dans laquelle le moyen faisant saillie (18) étend localement radialement la section transversale de l'ensemble d'entraînement, empêchant ainsi le moyen faisant saillie passer à travers le dispositif de stabilisation mobile (10b).

12. Colonne télescopique (1) selon l'une quelconque des revendications précédentes, dans laquelle les premier et deuxième dispositifs de stabilisation statiques (16a, 16b) sont disposés au niveau d'une surface extérieure du premier tube (110a).

13. Colonne télescopique (1) selon l'une quelconque des revendications 1 à 12, dans lequel les premier et deuxième dispositifs de stabilisation statiques (16c, 16d) sont disposés sur une surface extérieure du deuxième tube (110b) et en contact mobile avec une surface intérieure du premier tube (110c).

14. Colonne télescopique (1) selon l'une quelconque des revendications 1 à 13,
comprenant en outre un troisième tube télescopique (110c),
un troisième dispositif de stabilisation statique (16c) ;
un quatrième dispositif de stabilisation statique (16d) ;
un deuxième dispositif de stabilisation mobile (10b) ; et
dans laquelle l'ensemble d'entraînement (130) s'étend en outre à travers le troisième tube télescopique (110c) ;
dans laquelle les troisième et quatrième dispositifs de stabilisation statiques sont disposés axialement séparés l'un de l'autre selon une distance fixe, et entre le deuxième et le troisième tube ;
dans laquelle le deuxième dispositif de stabilisation mobile est disposé dans un espace intérieur du troisième tube, et dans laquelle le deuxième dispositif de stabilisation mobile est déplaçable axialement par rapport aux troisième et quatrième dispositifs de stabilisation statiques, et par rapport au troisième tube.
